# EUROPÄISCHE PATENTSCHRIFT

(11) **EP 0 669 508 B1**
(45) Veröffentlichungstag und Bekanntmachung des Hinweises auf die Patenterteilung: **18.12.2002**
(21) Anmeldenummer: 95101844.9
(22) Anmeldetag: 10.02.1995
(51) Int. Cl.: F25J 3/02, C01B 23/00

(54) **Verfahren und Vorrichtung zur Gewinnung von reinem Argon**
Process and apparatus for obtaining pure argon
Procédé et appareil permettant d'obtenir de l'argon pur

(30) Priorität: 24.02.1994 DE 4406051; 10.10.1994 DE 4436160
(43) Veröffentlichungstag der Anmeldung: 30.08.1995
(73) Patentinhaber: Linde Aktiengesellschaft, 65189 Wiesbaden (DE)
(72) Erfinder: Moll, Anton, D-82399 Raisting (DE)
(74) Vertreter: Kasseckert, Rainer

(56) Entgegenhaltungen:
- EP-A- 0 377 117
- DE-A- 4 317 916
- PATENT ABSTRACTS OF JAPAN vol. 17, no. 517 (M-1481) 17. September 1993 & JP-A-05 133 682 (NIPPON SANSO KK) 28. Mai 1993

## Beschreibung

Die Erfindung betrifft ein Verfahren und eine Vorrichtung zur Gewinnung von reinem Argon. Bei dem Verfahren wird Luft in einem Rektifiziersystem mit mindestens einer Luftzerlegersäule, einer Rohargonsäule und einer Reinargonsäule zerlegt, wobei eine Rohargonfraktion der Rohargonsäule entnommen und an einer Zwischenstelle in die Reinargonsäule eingeführt wird, deren Kopf durch indirekten Wärmetausch, vorzugsweise mit einer verdampfenden Fraktion, gekühlt wird, und wobei aus dem oberen Bereich der Reinargonsäule eine im wesentlichen Stickstoff enthaltende Restfraktion und aus dem unteren Bereich der Reinargonsäule eine Reinargonfraktion abgezogen werden.

Die Grundlagen der Reinargongewinnung sind in Hausen/Linde, Tieftemperaturtechnik, 2. Auflage 1985, Seiten 332 bis 334 beschrieben. Verfahren und Vorrichtungen der eingangs genannten Art sind außerdem aus den Patentveröffentlichungen EP-B-377117, EP-A-171711 und EP-A-331028 bekannt. Weiterentwicklungen zeigen die deutschen Patentanmeldungen P 44 06 049.1 und P 44 06 069.6 und die auf diesen Erstanmeldungen basierende europäische Patentanmeldung EP 669509 A1, die alle den gleichem Zeitrang wie diese Anmeldung haben. Dabei wird die Luftzerlegung im engeren Sinne in der Regel in einer Doppelsäule vorgenommen, aus deren Niederdruckteil die Einsatzfraktion für die Rohargonsäule entnommen wird. Das sauerstoffabgereicherte Rohargon wird in einer weiteren Rektifiziersäule, der Reinargonsäule, von leichterflüchtigen Verunreinigungen, insbesondere von Stickstoff befreit. Zwischen Rohargon- und Reinargonsäule kann gegebenenfalls eine weitere Stufe zur Sauerstoffentfernung, beispielsweise durch katalytische Oxidation mit Wasserstoff (Deoxo-Vorrichtung, siehe z.B. EP-A-171711 oder EP-A-331028) geschaltet sein.

Das Rohargonprodukt wird regelmäßig unter niedrigstmöglichem Druck, also knapp über Atmosphärendruck, gewonnen. Sein Druck muß daher vor der Einführung in die Reinargonsäule erhöht werden, damit am Kopf der Reinargonsäule noch genügend Überdruck vorhanden ist, um deren Kopfprodukt abzuführen und Rücklauf (im allgemeinen durch Kondensation von Kopfgas in indirektem Wärmeaustausch mit verdampfendem Stickstoff) zu erzeugen. Dazu ist in vielen Fällen die Zwischenschaltung eines eigenen Verdichters mit entsprechenden Kapital- und Betriebskosten erforderlich. Dies kann zwar durch Verflüssigung des Rohargons und Ausnützung des hydrostatischen Potentials vermieden werden (siehe EP-B-377117); allerdings ist man damit Beschränkungen in der geodätischen Anordnung der Reinargonsäule unterworfen, die in vielen Fällen aufgrund der räumlichen Verhältnisse nur mit hohem Aufwand erfüllt werden können. Darüber hinaus ist mit dem Verzicht auf einen Verdichter oftmals eine Beschränkung auf bestimmte Reinheit verbunden, beispielsweise kann es unmöglich sein, auf einen Stickstoffgehalt in der Größenordnung von 100 ppb oder geringer im Reinargonprodukt zu kommen.

Der Erfindung liegt daher die Aufgabe zugrunde, ein Verfahren und eine Vorrichtung der eingangs genannten Art zu entwickeln, die sich durch besonders hohe Wirtschaftlichkeit auszeichnen, insbesondere durch relativ günstige Kapital- und Betriebskosten für die Reinargongewinnung bei hoher Ausbeute und Reinheit im Reinargonprodukt.

Diese Aufgabe wird erfindungsgemäß dadurch gelöst, daß die Rohargonfraktion gasförmig aus der Rohargonsäule entnommen und gasförmig in die Reinargonsäule eingespeist wird und daß der Stoffaustausch in der Reinargonsäule mindestens teilweise durch eine Packung bewirkt wird.

Der Begriff Packung schließt hier grundsätzlich sowohl Füllkörperschüttungen als auch geordnete Packungen ein. Bevorzugt werden geordnete Packungen eingesetzt. Beispiele für spezielle Ausführungen von geordneten Packungen sind beispielsweise in der DE-A-27 22 424, der DE-A-42 09 132 oder in der DE-A-42 24 068 beschrieben. Zwar ist es an sich bekannt, derartige Packungen statt konventioneller Rektifizierböden in der Doppelsäule oder in der Rohargonsäule eines Luftzerlegers zu verwenden (EP-A-0 321 163, EP-B-0 377 117), ein Einsatz in der Reinargonsäule wurde bisher jedoch nicht für sinnvoll gehalten.

Der Begriff "Packung" schließt hier eine Mehrzahl von mit Füllkörpern und/oder einer geordneten Packung gefüllten Abschnitten innerhalb einer Säule ein, auch wenn er im Singular verwendet wird.

Durch den erfindungsgemäßen Einsatz von Packungen in der Reinargonsäule kann der Druckverlust in dieser Kolonne so stark verringert werden, daß spezielle Maßnahmen zur Verdichtung von Rohargon entfallen können. Im Rahmen der Erfindung hat sich herausgestellt, daß in vielen Fällen dieser Vorteil - entgegen den früheren Erwartungen - den erhöhten Aufwand deutlich überwiegt, so daß insgesamt Kapital- und/oder Betriebskosten eingespart werden können.

Es hat sich als besonders günstig erwiesen, wenn der Stoffaustausch in der Reinargonsäule oberhalb der Zwischenstelle, an der die Rohargonfraktion zugespeist wird, mindestens teilweise oder im wesentlichen ausschließlich durch eine Packung bewirkt wird. Dadurch wird ein wesentlicher Effekt der Erfindung erzielt, nämlich eine relativ geringe Druckdifferenz zwischen Rohargoneinspeisung und Kopfkondensator der Reinargonsäule, ohne daß die gesamte Reinargonsäule mit teuren Packungen ausgestattet werden muß.

Dabei ist es möglich, daß der Stoffaustausch in der Reinargonsäule im unteren Teil der Reinargonsäule, also unterhalb der Zwischenstelle, an der die Rohargonfraktion zugespeist wird, teilweise oder auch im wesentlichen ausschließlich durch Böden bewirkt wird. Damit kann ein großer Teil der Reinargonsäule mit relativ kostengünstigen Stoffaustauschelementen ausgerüstet werden. Einzelheiten über derartige Rektifizier- oder Austauschböden, die im Rahmen der Erfindung in der Reinargonsäule eingesetzt werden können, sind in Winnacker/Küchler, Chemische Technologie, Band 7, 3. Auflage (1975), Abschnitt 3.351, Seiten 197 bis 200 beschrieben.

Alternativ oder zusätzlich zum Einsatz von Packungen in oberen Teil der Reinargonsäule kann auch der Stoffaustausch in der Reinargonsäule unterhalb der Zwischenstelle, an der die Rohargonfraktion zugespeist wird, mindestens teilweise oder im wesentlichen ausschließlich durch eine Packung bewirkt werden. Die vorteilhafte Wirkung der Packung kann dann über einen entsprechend großen Anteil der Kolonnenhöhe ausgenutzt werden.

Der Kopf der Reinargonsäule kann dabei in bekannter Weise durch indirekten Wärmeaustausch mit flüssigem Stickstoff bewirkt werden, der dabei verdampft. Besonders vorteilhaft ist es jedoch, wenn der indirekte Wärmeaustausch zur Kühlung des Kopfes der Reinargonsäule mit einem Kühlmedium durchgeführt wird, das einen Sauerstoffgehalt von mindestens 10 % aufweist. Dadurch kann der in der Reinargonsäule benötigte Rücklauf erzeugt werden, ohne daß wertvoller Flüssigstickstoff verdampft wird, der dann für die Rektifikation in der oder den Luftzerlegersäule(n) verloren ist.

Als Kühlmedium können dabei verschiedene flüssige Prozeßströme verwendet werden. Vorzugsweise wird das Kühlmedium aus dem unteren oder mittleren Bereich der beziehungsweise einer der Luftzerlegersäulen, insbesondere der Druckstufe einer Doppelsäule abgezogen. Besonders günstig ist der Einsatz von Sumpfflüssigkeit aus der Druckstufe als Kühlmedium für die Reinargonsäule.

Die Verwendung des bestimmten Artikels für das Kühlmedium in dieser Anmeldung bedeutet nicht, daß ausgeschlossen ist, daß andere Fraktionen ebenfalls zur Kopfkühlung der Reinargonsäule beitragen, beispielsweise indem sie stromaufwärts des indirekten Wärmeaustauschs gegen die Kopffraktion mit dem Kühlmedium vermischt werden; allerdings ist der Beitrag der hier ausdrücklich als Kühlmedium bezeichneten Fraktion der ausschlaggebende für die Erzeugung von Rücklauf am Kopf der Reinargonsäule.

Die Beheizung des Sumpfes der Reinargonsäule kann durch den Austausch fühlbarer Wärme bewerkstelligt werden, indem der untere Bereich der Reinargonsäule durch indirekten Wärmeaustausch mit einer flüssigen Fraktion aus der Drucksäule, insbesondere mit der im unteren Bereich der Drucksäule anfallenden Sumpfflüssigkeit beheizt wird. Diese Art der Beheizung der Reinargonsäule ist in der deutschen Patentanmeldung P 44 06 069.6 und der europäischen Patentanmeldung EP 669509 A1, die deren Priorität beansprucht, ausführlich beschrieben. Dabei ist es günstig, wenn mindestens ein Teil flüssigen Fraktion aus der Drucksäule stromabwärts des indirekten Wärmeaustauschs zur Beheizung des unteren Bereichs der Reinargonsäule als Kühlmedium zur Kondensation der Kopffraktion(en) aus Reinargonsäule und/oder Rohargonsäule verwendet wird und damit eine gewisse Integration von Sumpfbeheizung und Kopfkühlung an der Reinargonsäule erreicht wird.

Die Erfindung betrifft außerdem eine Vorrichtung zur Durchführung dieses Verfahrens, wie sie in den Patentansprüchen 11 und 12 beschrieben ist.

Grundlagen und Teilmerkmale der Erfindung werden im folgenden anhand zweier in den Zeichnungen schematisch dargestellten Ausführungsbeispiele näher erläutert. Hierbei zeigen
- Figur 1: ein erstes Ausführungsbeispiel Verfahrens und einer Vorrichtung mit konventioneller Kopfkühlung der Reinargonsäule und
- Figur 2: ein zweites Ausführungsbeispiel mit neuartiger Kopfkühlung der Reinargonsäule.

Die beiden Ausführungsbeispiele stimmen in weiten Teilen miteinander überein; einander entsprechende Verfahrensschritte beziehungsweise Apparate sind mit gleichen Bezugszeichen versehen.

Atmosphärische Luft wird bei 1 angesaugt, im Luftverdichter 2 komprimiert, vorgekühlt (3), in einer Molsiebstation 4 von Kohlendioxid und Wasserdampf befreit, im Hauptwärmetauscher 5 auf etwa Taupunkt abgekühlt und schließlich über Leitung 6 in die Druckstufe 8 einer Doppelsäule 7 eingeführt. Druckstufe 8 und Niederdruckstufe 9 der Doppelsäule 7 stehen über einen Kondensator-Verdampfer 10 in wärmetauschender Verbindung. Sumpfflüssigkeit 11 und flüssiger Stickstoff 12 aus der Drucksäule 8 werden mindestens zum Teil in die Niederdrucksäule 9 eingedrosselt. Die gasförmigen Produkte der Niederdrucksäule, reiner Stickstoff 14, unreiner Stickstoff 15 und gasförmiger Sauerstoff 16, werden im Hauptwärmetauscher 5 gegen zu zerlegende Luft auf etwa Umgebungstemperatur angewärmt. Falls gewünscht, können auch Flüssigprodukte gewonnen werden: Stickstoff über Leitung 13 und/oder Sauerstoff 36 vom Sumpf der Niederdrucksäule 9. Insbesondere in diesem Fall wird in der Regel Kälte durch arbeitsleistende Entspannung von Prozeßströmen erzeugt, beispielsweise in einem mit Luft oder Stickstoff betriebenen Kältekreislauf mit einer, zwei oder mehr Entspannungsturbinen oder durch arbeitsleistende Entspannung von Luft auf etwa Niederdrucksäulenniveau und Direkteinspeisung der Luft.

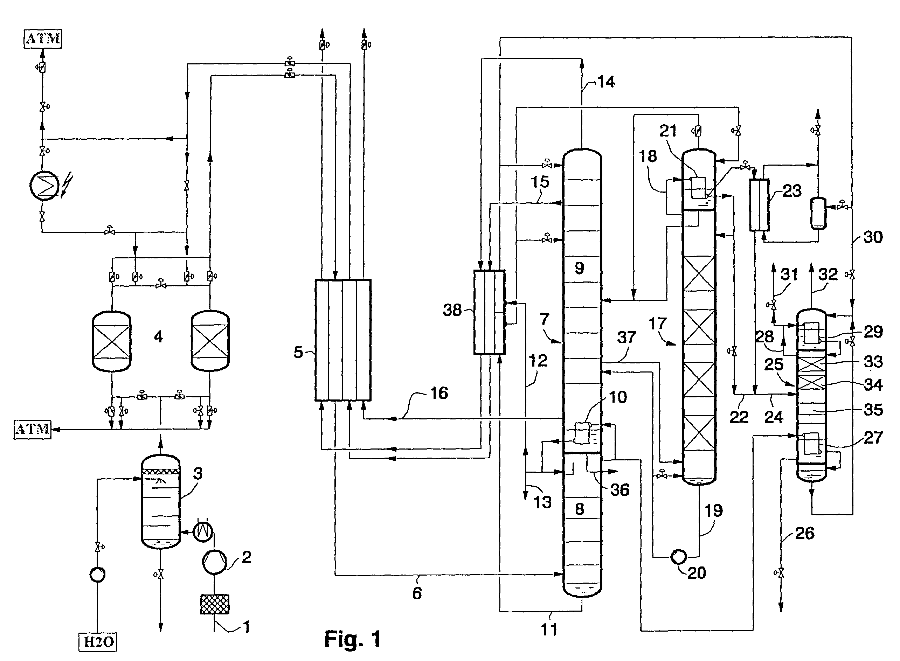

An einer Zwischenstelle der Niederdrucksäule 9 wird eine argonhaltige Sauerstofffraktion 37 abgezogen und in einer Rohargonsäule 17 in am Kopf der Säule anfallendes Rohargon 18 und eine Restflüssigkeit 19 zerlegt, die - gegebenfalls mit Hilfe einer Pumpe 20 - in die Niederdrucksäule zurückgespeist wird. Die Rohargonfraktion 18 wird in einem Rohargonkondensator 21 gegen verdampfende Sumpfflüssigkeit aus der Drucksäule mindestens teilweise kondensiert. Das Kondensat wird zu einem Teil als Rücklauf auf die Rohargonsäule 17 aufgegeben und zu einem anderen Teil als Zwischenprodukt 22, 24 abgezogen. In Figur 1 ist gezeigt, wie nicht kondensiertes Rohargon in einem Wärmetauscher 23 gegen eine Flüssigfraktion (hier: Stickstoff) kondensiert und dann mit dem flüssig abgezogenen Teil 22 zur Rohargonfraktion 24 vereinigt werden kann. Die Rohargonfraktion 24, die den Einsatz für die Reinargonsäule 25 bildet, enthält bei beiden Ausführungsbeispielen noch etwa 0,1 bis 1000 ppm, vorzugsweise weniger als 10 ppm schwererflüchtige Komponenten (vor allem Sauerstoff) und etwa 0,1 bis 5 %, vorzugsweise 0,5 bis 1 % leichterflüchtige Verunreinigungen (insbesondere Stickstoff).

Vom Sumpf der Reinargonsäule 25 wird das Reinargonprodukt 26 - vorzugsweise in flüssigem Zustand - abgezogen. Das Reinargonprodukt 26 weist an Verunreinigungen noch 0,1 bis 1000 ppm, vorzugsweise weniger als etwa 1 ppm Sauerstoff und 0,05 bis 100 ppm, vorzugsweise etwa 1 ppm oder weniger Stickstoff auf.

Die Reinargonsäule enthält eine Packung, vorzugsweise eine geordnete Packung. In dem dargestellten Beispiel sind zwei Packungsabschnitte 33, 34 oberhalb der Rohargonzuspeisung 24 dargestellt. Ebenso könnte sich dort beispielsweise nur ein Packungsabschnitt befinden, der oberhalb und/oder unterhalb durch konventionelle Rektifizierböden ergänzt wird. Die Stoffaustauschelemente in der Reinargonsäule oberhalb der Zuspeisestelle der Rohargonfraktion 24 entsprechen 2 bis 15, vorzugsweise etwa 8 bis 10 theoretischen Böden.

Unterhalb der Rohargonzuspeisung befinden sich 30 bis 50, vorzugsweise etwa 40 bis 45 theoretische Böden. Sie sind in dem Beispiel der Zeichnung ausschließlich durch Böden 35 realisiert; es ist im Rahmen der Erfindung jedoch auch der teilweise, im wesentlichen ausschließliche oder ausschließliche Einsatz von Packungen, insbesondere geordneten Packungen möglich.

Die übrigen Säulen des Rektifiziersystems können Böden und/oder Packungen und/oder Kombinationen beider Typen von Stoffaustauschelementen enthalten. Wie in der Zeichnung dargestellt, ist insbesondere in der Rohargonsäule der Einsatz einer - vorzugsweise geordneten - Packung günstig, da damit die rein rektifikatorische Entfernung des Sauerstoffs möglich ist (siehe EP-B-377117). Aber auch die Doppelsäule 7, insbesondere die Niederdrucksäule 8 kann Packungen enthalten, beispielsweise geordnete.

In Figur 1 ist das Verfahren im Zusammenhang mit einer konventionellen Kühlung und Beheizung der Reinargonsäule 25 dargestellt: Die Sumpfheizung 27 wird mit gasförmigem Stickstoff vom Kopf der Drucksäule 8 betrieben. Kopfgas 28 der Reinargonsäule 25, das zu 20 bis 80 %, vorzugsweise etwa 40 bis 60 % aus Stickstoff besteht, wird teilweise in einem Kopfkondensator 29, der mit Stickstoff (Kondensat aus der Sumpfheizung 27 und/oder Flüssigkeit 30 aus der Drucksäule 8) gekühlt wird, kondensiert und zu einem anderen Teil als Restgas 31 abgeführt. Letzteres kann beispielsweise in die Atmosphäre abgelassen oder, zum Beispiel gemeinsam mit dem am Kopfkondensator 29 anfallenden Dampf 32, dem Unrein-Stickstoffstrom 15 aus der Niederdrucksäule 9 zugespeist werden.

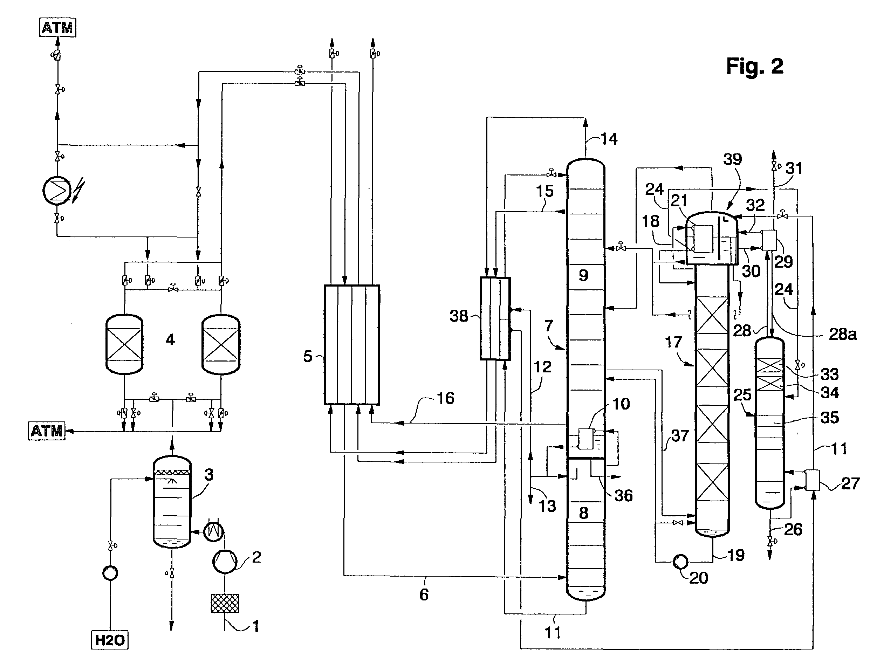

Figur 2 zeigt eine verbesserte Form der Wärmeab- und -zufuhr für die Reinargonsäule 25.

Im Wärmetauscher 27, der zum Eintrag von Wärme in den unteren Bereich der Reinargonsäule 25 dient, wird ein Teil der Sumpfflüssigkeit aus der Reinargonsäule gegen die flüssige, unter einem Druck von beispielsweise 1 bis 3 bar, vorzugsweise 1,2 bis 2,0 bar stehende Sumpffraktion 11 aus der Drucksäule 8 verdampft. Das Heizmedium 11 wird dabei unterkühlt.

Das unterkühlte Heizmedium 11a wird im folgenden als Kühlmedium für die Erzeugung von Rücklauf für Rohargon- und Reinargonsäule verwendet. Die Kopfkühlung der Rohargonsäule erfolgt in einem Kondensator-Verdampfer 39, in den im wesentlichen die gesamte Sumpfflüssigkeit aus der Drucksäule 8 (nach Durchströmen des Sumpfverdampfers 27) eingeleitet wird. (Kleinere Anteil der Sumpffraktion der Drucksäule können auf anderem Weg entnommen werden, beispielsweise über einen Sicherheitsablaß.) Die Drucksäulenflüssigkeit wird über eine Leitung 11, die durch einen Unterkühlungsgegenströmer 38 und den Wärmetauscher 27 führt, in den Verdampfungsraum des Kondensator-Verdampfers 39 eingespeist. Gasförmiges Rohargon vom Kopf der Rohargonsäule 17 wird über Leitung 18 durch einen Wärmetauscher 21 geleitet, der im Flüssigkeitsbad des Kondensator-Verdampfers angeordnet ist. Ein Teil des im Wärmetauscher 21 gebildeten Kondensats wird als Rücklauf auf die Rohargonsäule aufgegeben, ein anderer Teil als Zwischenprodukt 24 abgeführt.

Über Leitung 30 strömt Flüssigkeit zu einem weiteren Wärmetauscher 29, der als Kopfkondensator für die Reinargonsäule 25 dient. Das im Wärmetauscher 29 verdampfte Kühlmedium kann über Leitung 32 in den Verdampfungsraum des Kondensator-Verdampfers 39 zurückgespeist werden. Über Leitung 28 tritt die Kopffraktion der Reinargonsäule in indirekten Wärmeaustausch mit dem Kühlmedium. Dabei gebildetes Kondensat strömt über die Verbindung 28a wieder in die Reinargonsäule 25 zurück. Der gasförmig verbleibende Rest wird bei 31 abgezogen. Für die Beschreibung der genauen Funktionsweise der Kopfkühlung von Roh- und Reinargonsäule sowie für weitere Varianten dieses Verfahrensdetails wird auf die deutsche Patentanmeldung P 44 06 049.1 und die korrespondierende europäische Patentanmeldung (beide mit gleichem Zeitrang wie die vorliegende Anmeldung) Bezug genommen. Alternativ dazu ist es möglich, die Kopfkondensatoren 21 und 29 von Roh- und Reinargonsäule unabhängig voneinander zu betreiben, indem die Leitung 11 direkt mit der Verdampfungsseite des Kopfkondensators 29 verbunden ist.

In Abweichung von der zeichnerischen Darstellung in den beiden Figuren wird bei der Erfindung das Kopfprodukt der Rohargonsäule gasförmig entnommen und gasförmig in die Reinargonsäule eingespeist, indem beispielsweise die Leitungen 18 und 24 stromaufwärts des Wärmetauschers 21 miteinander verbunden sind.

Alternativ zu der in den Zeichnungen abgebildeten Arten der Sumpfheizung der Reinargonsäule 25 kann bei der Erfindung auch gasförmige Luft zum Aufkochen der Reinargonsäule verwendet werden, beispielsweise so wie es in der deutschen Patentanmeldung P 44 06 049.1 und der korrespondierenden europäischen Patentanmeldung EP 669509 A1 gezeigt ist.

## Patentansprüche

1. Verfahren zur Gewinnung von reinem Argon, bei dem Luft in einem Rektifiziersystem mit mindestens einer Luftzerlegersäule (9), einer Rohargonsäule (17) und einer Reinargonsäule (25) zerlegt wird, wobei eine Rohargonfraktion (24) der Rohargonsäule (17) entnommen und an einer Zwischenstelle in die Reinargonsäule (25) eingeführt wird, deren Kopf durch indirekten Wärmetausch (29) gekühlt wird, und wobei aus dem oberen Bereich der Reinargonsäule (25) eine im wesentlichen Stickstoff enthaltende Restfraktion (31) und aus dem unteren Bereich der Reinargonsäule (25) eine Reinargonfraktion (26) abgezogen werden, **dadurch gekennzeichnet, daß** die Rohargonfraktion gasförmig aus der Rohargonsäule entnommen und gasförmig in die Reinargonsäule eingespeist wird und daß der Stoffaustausch in der Reinargonsäule (25) mindestens teilweise durch eine Packung (33, 34) bewirkt wird.

2. Verfahren nach Anspruch 1, **dadurch gekennzeichnet, daß** der Stoffaustausch in der Reinargonsäule (25) oberhalb der Zwischenstelle, an der die Rohargonfraktion (24) zugespeist wird, mindestens teilweise durch eine Packung (33, 34) bewirkt wird.

3. Verfahren nach Anspruch 2, **dadurch gekennzeichnet, daß** der Stoffaustausch in der Reinargonsäule (25) oberhalb der Zwischenstelle, an der die Rohargonfraktion (24) zugespeist wird, im wesentlichen ausschließlich durch eine Packung (33, 34) bewirkt wird.

4. Verfahren nach einem der Ansprüche 1 bis 3, **dadurch gekennzeichnet, daß** der Stoffaustausch in der Reinargonsäule (25) unterhalb der Zwischenstelle, an der die Rohargonfraktion (24) zugespeist wird, im wesentlichen ausschließlich durch Böden (35) bewirkt wird.

5. Verfahren nach einem der Ansprüche 1 bis 3, **dadurch gekennzeichnet, daß** der Stoffaustausch in der Reinargonsäule (25) unterhalb der Zwischenstelle, an der die Rohargonfraktion (24) zugespeist wird, mindestens teilweise durch eine Packung bewirkt wird.

6. Verfahren nach einem der Ansprüche 1 bis 3, **dadurch gekennzeichnet, daß** der Stoffaustausch in der gesamten Reinargonsäule (25) im wesentlichen ausschließlich durch eine Packung bewirkt wird.

7. Verfahren nach einem der Ansprüche 1 bis 6, **dadurch gekennzeichnet, daß** der indirekte Wärmeaustausch (29) zur Kühlung des Kopfes der Reinargonsäule (25) mit einem Kühlmedium (11, 30) durchgeführt wird, das einen Sauerstoffgehalt von mindestens 10 % aufweist.

8. Verfahren nach Anspruch 7, **dadurch gekennzeichnet, daß** das Kühlmedium (11) aus dem unteren oder mittleren Bereich der beziehungsweise einer der Luftzerlegersäulen (9) abgezogen wird.

9. Verfahren nach Anspruch 8, **dadurch gekennzeichnet, daß** das Rektifiziersystem eine aus einer Drucksäule (8) und aus einer Niederdrucksäule (9) bestehende Doppelsäule (7) aufweist, wobei das Kühlmedium aus dem unteren oder mittleren Bereich der Drucksäule (8) abgezogen wird.

10. Verfahren nach Anspruch 9, **dadurch gekennzeichnet, daß** im unteren Bereich der Drucksäule (8) anfallende Sumpfflüssigkeit (11) als Kühlmedium verwendet wird.

11. Vorrichtung zur Durchführung des Verfahrens nach einem der Ansprüche 1 bis 10 mit einem Rektifiziersystem, das mindestens eine Luftzerlegersäule (9), eine Rohargonsäule (17) und eine Reinargonsäule (25) aufweist, wobei die Rohargonsäule (17) und eine Zwischenstelle der Reinargonsäule (25) über eine Rohargonleitung (24) verbunden sind, **dadurch gekennzeichnet, daß** die Rohargonleitung als Gasleitung ausgebildet ist und daß mindestens eine Packung (33, 34) in der Reinargonsäule (25) angeordnet ist.

12. Vorrichtung nach Anspruch 11, **dadurch gekennzeichnet, daß** ein Wärmetauscher (29) über eine Dampfleitung (28) und über eine Kondensatleitung (28a) mit dem oberen Bereich der Reinargonsäule (25) verbunden ist und eine Kühlmediumsleitung (11, 30) aufweist und daß die Kühlmediumsleitung (11, 30) mit einer Quelle für ein Kühlmedium, das einen Sauerstoffgehalt von mindestens 10 % aufweist, verbunden ist.

## Claims

1. Process for obtaining pure argon, in which air is is fractionated in a rectification system having at least one air fractionation column (9), a crude argon column (17) and a pure argon column (25), a crude argon fraction (24) being removed from the crude argon column (17) and being introduced at an intermediate location into the pure argon column (25), the top of which is cooled by indirect heat exchange (29), and a residual fraction (31), which substantially contains nitrogen, being extracted from the upper region of the pure argon column (25), and a pure argon fraction (26) being extracted from the lower region of the pure argon column (25), **characterized in that** the crude argon fraction is removed in gas form from the crude argon column and is fed in gas form into the pure argon column, and **in that** the mass transfer in the pure argon column (25) is effected at least in part by a packing (33,34).

2. Process according to Claim 1, **characterized in that** the mass transfer in the pure argon column (25) above the intermediate location at which the crude argon fraction (24) is fed in is effected at least in part by a packing (33,34).

3. Process according to Claim 2, **characterized in that** the mass transfer in the pure argon column (25) above the intermediate location at which the crude argon fraction (24) is fed in is effected substantially exclusively by a packing (33,34).

4. Process according to one of Claims 1 to 3, **characterized in that** the mass transfer in the pure argon column (25) below the intermediate location at which the crude argon fraction (24) is fed in is effected substantially exclusively by plates (35).

5. Process according to one of Claims 1 to 3, **characterized in that** the mass transfer in the pure argon column (25) below the intermediate location at which the crude argon fraction (24) is fed in is effected at least in part by a packing.

6. Process according to one of Claims 1 to 3, **characterized in that** the mass transfer in the entire pure argon column (25) is effected substantially exclusively by a packing.

7. Process according to one of Claims 1 to 6, **characterized in that** the indirect heat exchange (29) for cooling the top of the pure argon column (25) is carried out using a cooling medium (11,30) which has an oxygen content of at least 10%.

8. Process according to Claim 7, **characterized in that** the cooling medium (11) is extracted from the lower or central region of the or one of the air fractionation columns (9).

9. Process according to Claim 8, **characterized in that** the rectification system includes a double column (7), which comprises a pressure column (8) and a low-pressure column (9), the cooling medium being extracted from the lower or central region of the pressure column (8).

10. Process according to Claim 9, **characterized in that** bottom liquid (11) which is produced in the lower region of the pressure column (8) is used as cooling medium.

11. Apparatus for carrying out the process according to one of Claims 1 to 10, having a rectification system which includes at least one air fractionation column (9), a crude argon column (17) and a pure argon column (25), the crude argon column (17) and an intermediate location on the pure argon column (25) being connected via a crude argon line (24), **characterized in that** the crude argon line is designed as a gas line, and **in that** at least one packing (33,34) is arranged in the pure argon column (25).

12. Apparatus according to Claim 11, **characterized in that** a heat exchanger (29) is connected to the upper region of the pure argon column (25) via a vapour line (28) and via a condensate line (28a) and has a cooling-medium line (11,30), and **in that** the cooling-medium line (11,30) is connected to a source for a cooling medium which has an oxygen content of at least 10%.

## Revendications

1. Procédé pour la production d'argon pur, dans lequel de l'air est fractionné dans un système de rectification présentant au moins une colonne de fractionnement (9) de l'air, une colonne (17) d'argon brut et une colonne (25) d'argon pur, une fraction (24) d'argon brut étant prélevée de la colonne (17) d'argon brut et introduite en un endroit intermédiaire dans la colonne (25) d'argon pur, dont la tête est refroidie par échange de chaleur (29) indirect et une fraction (31) résiduelle contenant essentiellement de l'azote étant soutirée de la zone supérieure de la colonne (25) d'argon pur et une fraction (26) d'argon pur étant soutirée de la zone inférieure de la colonne (25) d'argon pur, **caractérisé en ce que** la fraction d'argon brut est prélevée sous forme gazeuse de la colonne d'argon brut et est introduite sous forme gazeuse dans la colonne d'argon pur et que le transfert de matière dans la colonne (25) d'argon pur est provoqué au moins partiellement par un garnissage (33, 34).

2. Procédé selon la revendication 1, **caractérisé en ce que** le transfert de matière dans la colonne (25) d'argon pur, au-dessus de l'endroit intermédiaire où la fraction (24) d'argon brut est alimentée, est provoqué au moins partiellement par un garnissage (33, 34).

3. Procédé selon la revendication 2, **caractérisé en ce que** le transfert de matière dans la colonne (25) d'argon pur, au-dessus de l'endroit intermédiaire où la fraction (24) d'argon brut est alimentée, est provoqué de manière essentiellement exclusive par un garnissage (33, 34).

4. Procédé selon l'une quelconque des revendications 1 à 3, **caractérisé en ce que** le transfert de matière dans la colonne (25) d'argon pur, au-dessous de l'endroit intermédiaire où la fraction (24) d'argon brut est alimentée, est provoqué de manière essentiellement exclusive par des plateaux (35).

5. Procédé selon l'une quelconque des revendications 1 à 3, **caractérisé en ce que** le transfert de matière dans la colonne (25) d'argon pur, au-dessous de l'endroit intermédiaire où la fraction (24) d'argon brut est alimentée, est provoqué au moins partiellement par un garnissage.

6. Procédé selon l'une quelconque des revendications 1 à 3, **caractérisé en ce que** le transfert de matière dans l'ensemble de la colonne (25) d'argon pur est provoqué de manière essentiellement exclusive par un garnissage.

7. Procédé selon l'une quelconque des revendications 1 à 6, **caractérisé en ce que** l'échange de chaleur (29) indirect pour le refroidissement de la tête de la colonne (25) d'argon pur est réalisé par un agent de refroidissement (11, 30) qui présente une teneur en oxygène d'au moins 10 %.

8. Procédé selon la revendication 7, **caractérisé en ce que** l'agent de refroidissement (11) est soutiré dans la partie inférieure ou médiane de la ou de l'une des colonnes (9) de fractionnement de l'air.

9. Procédé selon la revendication 8, **caractérisé en ce que** le système de rectification présente une double colonne (7) constituée d'une colonne sous pression (8) et une colonne basse pression (9), l'agent de refroidissement étant soutiré de la zone inférieure ou médiane de la colonne sous pression (8).

10. Procédé selon la revendication 9, **caractérisé en ce que** le liquide de bas de colonne (11) qui se forme dans la partie inférieure de la colonne sous pression (8) est utilisé comme agent de refroidissement.

11. Dispositif pour réaliser le procédé selon l'une quelconque des revendications 1 à 10 avec un système de rectification qui présente au moins une colonne de fractionnement (9) de l'air, une colonne (17) d'argon brut et une colonne (25) d'argon pur, la colonne (17) d'argon brut et un endroit intermédiaire de la colonne (25) d'argon pur étant raccordés via une conduite (24) d'argon brut, **caractérisé en ce que** la conduite d'argon brut est réalisée sous forme de conduite à gaz et qu'au moins un garnissage (33, 34) est disposé dans la colonne (25) d'argon pur.

12. Dispositif selon la revendication 11, **caractérisé en ce qu'**un échangeur de chaleur (29) est raccordé via une conduite à vapeur (28) et via une conduite à condensat (28a) à la partie supérieure de la colonne (25) d'argon pur et présente une conduite (11, 30) d'agent de refroidissement et que la conduite (11, 30) d'agent de refroidissement est raccordée à une source d'agent de refroidissement, qui présente une teneur en oxygène d'au moins 10 %.
